# FASCICULE DE BREVET EUROPEEN

(11) **EP 2 873 569 B1**
(45) Date de publication et mention de la délivrance du brevet: **19.06.2019**
(21) Numéro de dépôt: 14193161.8
(22) Date de dépôt: 14.11.2014
(51) Int. Cl.: B60S 1/38, B60S 1/52, B60S 1/32, B60S 1/04

(54) **Système d'essuyage de vitre de véhicule muni d'un indicateur de chauffe**
Scheibenwischsystem eines Fahrzeugs, das mit einem Heizindikator ausgestattet ist
Vehicle windscreen-wiper system provided with a heating indicator

(30) Priorité: 19.11.2013 FR 1361362
(43) Date de publication de la demande: 20.05.2015
(73) Titulaire: Valeo Systèmes d'Essuyage, 78322 Le Mesnil Saint Denis (FR)
(72) Inventeur: Caillot, Gérald, 78720 CERNAY LA VILLE (FR); Jarasson, Jean-Michel, 78321 LE MESNIL SAINT DENIS (FR); Izabel, Vincent, 91380 CHILLY MAZARIN (FR)
(74) Mandataire: Callu-Danseux, Violaine

(56) Documents cités:
- WO-A1-2008/099056
- DE-A1-102007 056 322
- FR-A1- 2 899 544
- US-A- 5 649 337
- US-A- 6 028 291

## Description

L'invention concerne principalement un système d'essuyage de vitre de véhicule automobile muni d'un indicateur de chauffe.

L'invention porte également sur un véhicule automobile équipé d'au moins un tel système.

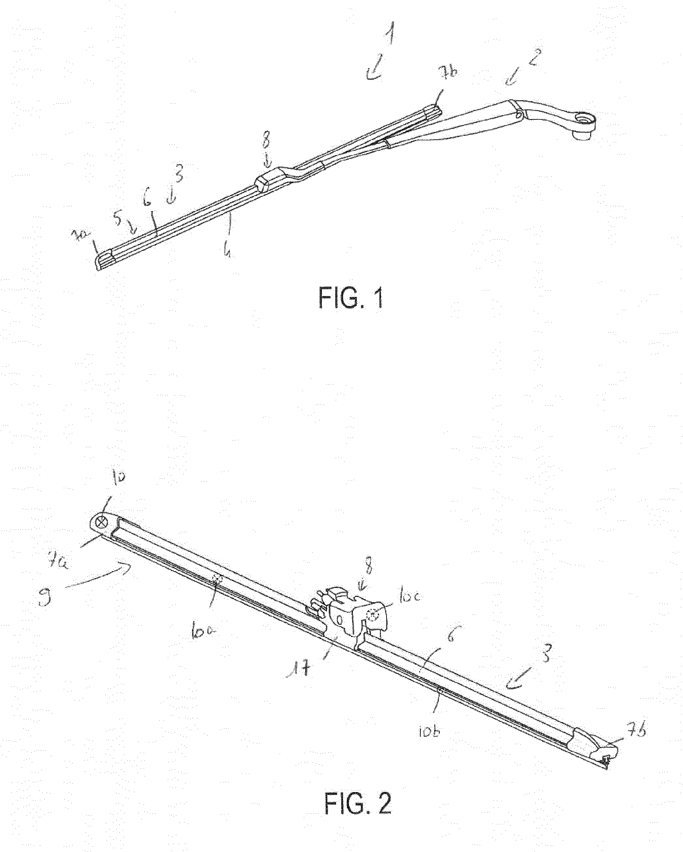

En référence à la figure 1 et de façon connue, un système d'essuyage 1 de vitre de véhicule comporte un bras 2 destiné à effectuer un mouvement de va-et-vient angulaire en entraînant un balai 3 en frottement contre la vitre à nettoyer du véhicule.

A cet effet, le balai 3 comporte une lame d'essuyage 4 en matière élastique, une structure support 5 retenant la lame 4 et un profilé 6 couramment dénommé déflecteur surmontant la structure support 5 sur l'ensemble de sa longueur. A chaque extrémité du balai se trouve un embout d'assemblage 7a, 7b destiné à maintenir ensemble la lame d'essuyage 4, la structure support 5 et le profilé 6.

Le bras 2 se termine à son extrémité externe par une chape fixée, notamment, par sertissage sur le bras 2. De manière alternative, cette chape peut également être formée à l'extrémité du bras par déformation de cette dernière et constituer un ensemble unitaire avec le bras. Ce dernier a pour fonction, par l'intermédiaire d'un adaptateur 8, et d'un connecteur 17 de supporter le balai d'essuyage 3.

Le connecteur 17 est serti sur le balai d'essuyage 3 et assure une transmission des efforts vers le balai, alors que l'adaptateur 8 est une pièce intermédiaire assurant une compatibilité entre différentes formes de chape et un même balai d'essuyage. L'adaptateur 8 et le connecteur 17 sont articulés en rotation l'un par rapport à l'autre autour d'un axe perpendiculaire au balai 3.

Pour certains types de système d'essuyage, le liquide lave glace est acheminé depuis un réservoir et par l'intermédiaire d'une pompe jusqu'à une ou des rampe(s) de projection de liquide non visible(s) sur cette figure et répartie(s) le long du balai 3. Chaque rampe s'étend alors selon un axe longitudinal définissant la longueur du balai d'essuyage. Un ou des tube(s) d'alimentation en liquide lave-glace, non représenté(s), longe(nt) le bras 2 jusqu'au connecteur 17 et assure(nt) l'alimentation en liquide de chaque rampe. La ou les rampe(s) de projection de liquide peut(vent), par exemple être aménagée(s) dans le profilé 6.

Il existe également des systèmes de projection de liquide disposés au niveau des bras 2 des systèmes d'essuyages.

Les basses températures des conditions hivernales nuisent au bon fonctionnement des systèmes d'essuyage que le système d'essuyage soit équipé ou non d'un dispositif de projection de liquide.

Dans le cas d'un système d'essuyage pourvu d'un dispositif de projection de liquide, le fonctionnement du système peut être gêné lorsque la température du liquide lave glace est basse, par exemple inférieure à 5°C. La(les) rampe(s) de projection de liquide disposée(s) au niveau du balai peut(vent) notamment être partiellement ou totalement gelée(s) et la flexibilité générale du balai peut être amoindrie. De façon connue, le liquide lave-glace peut être réchauffé au moyen d'un dispositif de chauffage en utilisant des conducteurs électriques chauffants noyés dans la masse des tube(s) d'alimentation en liquide lave-glace ou par un dispositif de chauffage approprié disposé au niveau de la structure support 5 du balai.

De même, quel que soit le type de système d'essuyage, les basses températures entraînent une diminution de la qualité d'essuyage du fait de la perte de souplesse du caoutchouc constituant la matière élastique de la lame d'essuyage 4 du balai 3.

On constate également qu'une accumulation de neige ou d'eau gelée au niveau du balai peut empêcher un bon fonctionnement de ce dernier, notamment en empêchant un bon retournement de la lame d'essuyage entre chaque mouvement de va-et-vient du bras.

De tels effets peuvent être corrigés par un dispositif de chauffage approprié disposé au niveau de la structure support 5 du balai. Le document WO-A-2008/099056 montre le préambule de la revendication 1.

Toutefois que l'on se trouve dans le cas d'un dispositif de chauffage du liquide lave-glace disposé en amont du balai 3 ou dans le cas de balais chauffants, les chauffes respectives sont commandées automatiquement selon des critères de températures prédéfinis.

Il en résulte que l'utilisateur n'est pas averti quant à la chauffe des balais et/ou du liquide lave-glace.

Dans ce contexte, la présente invention vise un système d'essuyage permettant d'avertir l'utilisateur du fonctionnement du dispositif de chauffe des balais et/ou du liquide lave-glace.

A cet effet, le système d'essuyage de vitre de véhicule comporte au moins un balai d'essuie-glace entraîné en mouvement par un bras qui est articulé au dit balai par au moins un ensemble connecteur/adaptateur, lequel système est muni d'un dispositif de chauffage, caractérisé en ce qu'il comporte au moins un indicateur de chauffe indiquant qu'au moins un élément dudit système d'essuyage possède une température supérieure à une valeur seuil prédéfinie.

Le système d'essuyage de l'invention peut également comporter les caractéristiques optionnelles suivantes considérées isolément ou selon toutes les combinaisons techniques possibles :
- le balai comporte au moins une structure support retenant une lame d'essuyage, et un profilé surmontant la structure support sur l'ensemble de sa longueur, ledit balai comporte en outre à ses extrémités opposées deux embouts d'assemblage, et l'indicateur de chauffe est situé sur la lame d'essuyage, et/ou sur le profilé, et/ou sur un embout d'assemblage, et/ou sur le connecteur, et/ou sur l'adaptateur ;
- le balai comporte au moins une structure support retenant une lame d'essuyage, et un profilé surmontant la structure support sur l'ensemble de sa longueur, la structure support du balai comporte deux vertèbres de rigidification retenues dans des rainures longitudinales de la lame d'essuyage et au moins un élément de maintien possédant un bras coiffant localement le profilé, les deux extrémités dudit élément de maintien venant chacune en prise sur chaque vertèbre du balai et l'indicateur de chauffe est situé sur ledit élément de maintien ;
- le système d'essuyage comprend un système de projection de liquide intégré au balai comprenant au moins une rampe s'étendant selon un axe longitudinal définissant la longueur du balai d'essuyage et au moins un tube d'alimentation en liquide longeant le bras jusqu'au connecteur et assurant l'alimentation en liquide de ladite rampe ;
- le système d'essuyage comprend un système de projection de liquide disposé au niveau du bras ;
- le dispositif de chauffage est apte à réchauffer le liquide et est disposé au niveau de la structure support du balai et/ou au niveau du tube d'alimentation assurant l'alimentation en liquide de ladite rampe ;
- l'indicateur de chauffe est disposé au niveau du bras ;
- l'indicateur de chauffe comprend un matériau thermochrome ;
- la forme du matériau thermochrome est un message informatif, le matériau thermochrome est translucide en l'absence de tout chauffage d'un élément du système d'essuyage ou possède la même couleur que la pièce le supportant, et le matériau thermochrome est coloré lorsque ledit élément est chaud ;
- l'indicateur de chauffe est constitué d'une première couche formant message informatif appliqué sur un élément du système d'essuyage, ladite première couche étant recouverte d'un matériau thermochrome coloré en l'absence de tout chauffage dudit élément de manière à en masquer le message informatif, et translucide lorsque ledit élément est chaud de manière à en découvrir le message informatif ;
- le matériau thermochrome de l'indicateur de chauffe comporte des cristaux, des colorants ou des pigments thermochromiques.

Enfin, l'invention porte sur un véhicule automobile équipé d'au moins un système d'essuyage tel que précédemment défini.

D'autres caractéristiques et avantages de l'invention ressortiront clairement de la description qui en est donnée ci-dessous, à titre indicatif et nullement limitatif, en référence aux figures annexées parmi lesquelles :
- la figure 1 déjà présentée est une représentation schématique en perspective d'un système d'essuyage de l'art antérieur,
- la figure 2 est une représentation schématique en perspective prise du coté habitacle du véhicule d'un balai du système d'essuyage de l'invention selon un premier type de variantes,
- la figure 3 est une représentation schématique en perspective prise du coté extérieur au véhicule d'un balai du système d'essuyage de l'invention selon un deuxième type de variantes,
- la figure 4 est une représentation schématique en perspective de la face supérieure du bras du système d'essuyage de l'invention selon un troisième type de variantes,
- la figure 5 est une représentation schématique en perspective de la face inférieure du bras du système d'essuyage de l'invention selon un quatrième type de variantes, et
- la figure 6 est une représentation schématique en perspective d'un balai du système d'essuyage de l'invention selon un cinquième type de variantes.

L'invention consiste à prévoir un indicateur de chauffe placé au niveau d'une zone du système d'essuyage susceptible d'être chauffée soit par le dispositif de chauffage du balai si le système d'essuyage est doté d'un tel dispositif, soit par le dispositif de chauffage du liquide lave-glace si le système d'essuyage est doté de ce dispositif.

L'indicateur de chauffe comporte un matériau thermochrome qui réagit à la chaleur en changeant de couleur. On peut citer à cet effet des cristaux, des pigments ou encore des colorants thermochromiques.

En référence à la figure 2, lorsque le système d'essuyage 1 comporte un dispositif de chauffage du balai 3, on peut prévoir un indicateur de chauffe situé sur la face 9 du balai 3 qui est tournée vers l'habitacle du véhicule. L'indicateur de chauffe 10 peut être alors sur l'un des deux embouts d'assemblage 7a,7b, l'indicateur de chauffe 10a peut également être positionné sur le déflecteur 6, l'indicateur de chauffe 10b peut être encore sur la lame d'essuyage 4 ou l'indicateur de chauffe 10c peut être sur l'adaptateur 8 ou le connecteur 17. Dans le cadre de l'invention on peut également prévoir plusieurs de ces indicateurs de chauffe 10, 10a, 10b, 10c sur cette face 9 du balai 3. L'indicateur de chauffe 10, 10a, 10b, 10c présente alors l'avantage d'être visible depuis l'habitacle du véhicule.

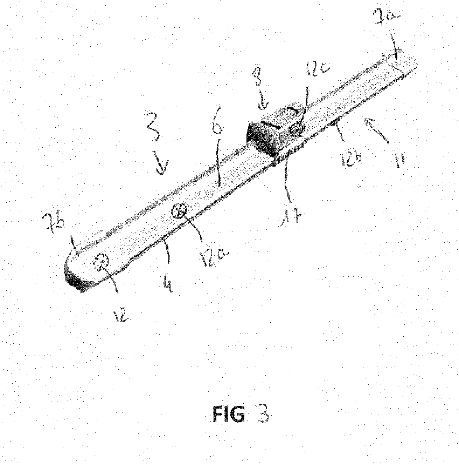

En référence à la figure 3, l'indicateur de chauffe peut être situé sur la face 11 du balai 3 opposée à la face 9, c'est-à-dire la face qui est non visible par les occupants du véhicule mais depuis l'extérieur du véhicule. Comme précédemment, l'indicateur de chauffe 12 peut être alors sur l'un des deux embouts d'assemblage 7a, 7b, l'indicateur de chauffe 12a peut également être positionné sur le déflecteur 6, l'indicateur de chauffe 12b peut être encore sur la lame d'essuyage 4 ou l'indicateur de chauffe 12c peut être sur l'adaptateur 8 ou le connecteur 17. Dans le cadre de l'invention, on peut également prévoir plusieurs de ces indicateurs de chauffe 12, 12a, 12b, 12c sur cette face 11 du balai 3. L'indicateur de chauffe 12, 12a, 12b, 12c est alors visible depuis l'extérieur du véhicule.

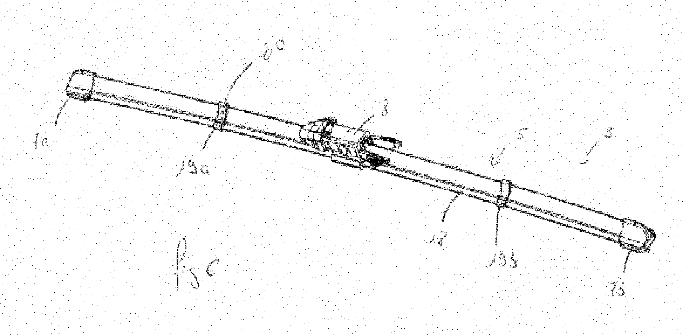

En référence à la figure 6, la structure support 5 du balai 3 peut notamment comprendre deux vertèbres de rigidification 18 insérées dans des rainures longitudinales de la lame d'essuyage 4. Dans le cas représenté, le profilé 6 est venu de matière avec la lame d'essuyage 4. Des éléments de maintien 19a, 19b disposés à mi-distance entre les embouts d'assemblage 7a, 7b et l'ensemble connecteur/adaptateur sont rapportés sur le balai 3. Ces éléments de maintien 19a, 19b sont dans l'exemple représenté au nombre de deux, chaque élément étant disposé entre l'un des embouts d'assemblage 7a, 7b et l'ensemble connecteur/adaptateur. Chaque élément de maintien 19a, 19b possède un bras coiffant localement le profilé 6 et deux extrémités venant chacune en prise sur chaque vertèbre 18 du balai. Dans ce mode de réalisation, l'indicateur de chauffe 20 peut être alors situé sur l'un des éléments de maintien 19a, 19b ou sur les deux éléments de maintien 19a, 19b ou sur tour autre élément du balai adapté comme cela a été décrit précédemment.

Le balai 3 peut également comporter un ou plusieurs indicateurs de chauffe situés sur sa face 11 visible depuis l'extérieur du véhicule et un ou plusieurs indicateurs de chauffe situés sur sa face 9 visible du coté de l'habitacle.

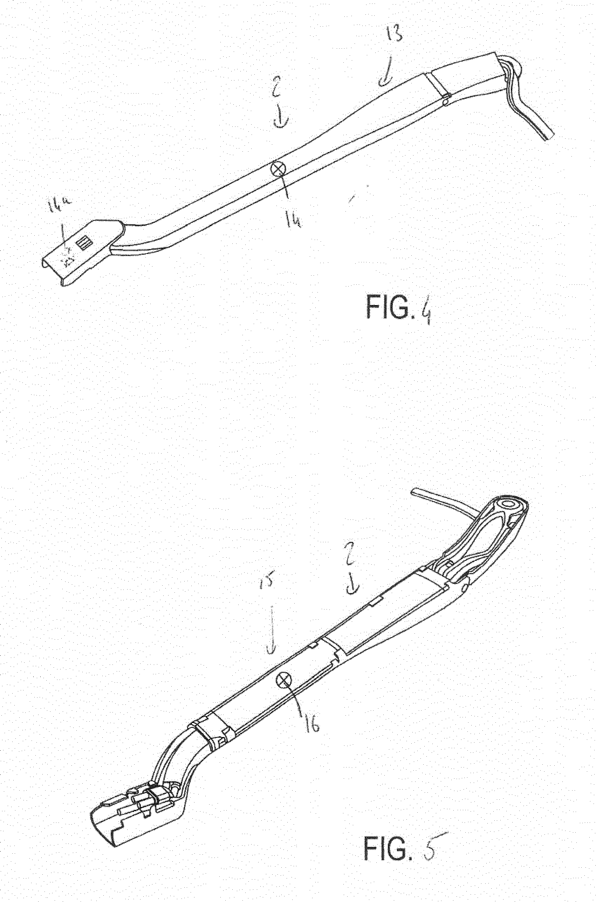

En référence à la figure 4, le système d'essuyage 1 peut également comporter un dispositif de chauffe du liquide lave-glace. Le(s) tube(s) d'alimentation en liquide lave-glace, décrits précédemment et non visible(s) sur cette figure, transporte(nt) le liquide lave-glace chauffé en longeant le bras 2 jusqu'au connecteur 17.

La chauffe du liquide est assurée soit directement au niveau du (des) tube(s) d'alimentation par des moyens de chauffage disposés dans la matière constituant lesdits tubes ou soit par un système de chauffage disposé en amont du (des) tube(s) d'alimentation.

Ainsi, le bras 2 et le connecteur 17 sont chauffés par l'intermédiaire de la circulation du liquide lave-glace chaud.

Selon l'invention, un indicateur de chauffe peut alors être situé sur la face 13 du bras 2 qui est opposée au capot du véhicule, c'est-à-dire sur la face supérieure du bras 2. L'indicateur de chauffe 14 peut à cet effet être sur le bras 2 ou l'indicateur de chauffe 14a peut être positionné sur la chape positionnée à l'extrémité du bras. L'indicateur de chauffe 14, 14a est alors visible depuis l'extérieur du véhicule.

En référence à la figure 5, l'indicateur de chauffe 16 peut également être situé sur la face 15 du bras 2 du système d'essuyage disposée face au capot du véhicule, c'est-à-dire sur la face inférieure du bras 2. L'indicateur de chauffe 16 peut alors être positionné directement sur le(s) tube(s) d'alimentation longeant le bras 2 ou sur la face extérieure d'un cache retenant le(s) tube(s) d'alimentation dans le bras 2. En variante non représenté, le système d'essuyage peut comprendre un système de projection de liquide lave-glace comprenant des gicleurs positionnés au niveau du bras 2. Dans un tel cas, l'indicateur de chauffe peut être positionné à proximité des gicleurs projetant l'eau chaude.

L'indicateur de chauffe 10, 10a, 10b, 10c ; 12, 12a, 12b, 12c ; 14, 14a ; 16 ; 20 communique à l'utilisateur l'information selon laquelle le balai 3 ou le bras 2 du système d'essuyage est chaud, et par conséquent également l'information selon laquelle le dispositif de chauffe du balai 3 ou le dispositif de chauffe du liquide lave-glace est en fonctionnement.

Or ces dispositifs de chauffe du balai 3 ou du liquide lave-glace sont automatiquement commandés en fonctionnement lorsqu'un paramètre franchit une valeur seuil, par exemple lorsque la température extérieure est inférieure à une température seuil. Par conséquent, le changement de couleur de l'indicateur de chauffe indique que les conditions environnementales sont hivernales et requièrent une prudence particulière de conduite.

Le changement de couleur de l'indicateur de chauffe indique également qu'il faut éviter de manipuler le balai ou le bras en raison de sa température élevée.

Selon l'invention, l'indicateur de chauffe 10, 10a, 10b, 10c ; 12, 12a, 12b, 12c ; 14, 14a ; 16 ; 20 peut prendre deux configurations différentes, ces configurations ne représentant que des exemples de réalisation non limitatifs.

En premier lieu, on peut prévoir un indicateur de chauffe 10, 10a, 10b, 10c ; 12, 12a, 12b, 12c ; 14, 14a ; 16 ; 20 constitué d'une couche de matériau thermochrome qui passe de translucide à coloré lorsque le balai 3 ou le bras 2 est chaud. La couche de matériau thermochrome peut avoir la forme d'un message informatif alertant l'utilisateur, lorsque l'indicateur de chauffe devient coloré, soit des conditions hivernales, soit de la température élevée du balai ou de bras. En variante, le matériau thermochrome peut avoir la même couleur que la pièce qui le supporte et changer de couleur lorsque le balai 3 ou le bras 2 est chaud.

On peut également prévoir un indicateur de chauffe 10, 10a, 10b, 10c ; 12, 12a, 12b, 12c ; 14, 14a ; 16 ; 20 constitué d'une première couche à caractère informatif en matériau non thermochrome, recouverte d'une couche de matériau thermochrome coloré, pouvant notamment être de la même couleur que la pièce le supportant et qui devient translucide à la chaleur. Lorsque le balai 3 ou le bras 2 est chaud, la couche de matériau devenant translucide laisse apparaitre la première couche informative.

Le choix des matériaux thermochromes est réalisé parmi les matériaux thermochromes connus selon que l'on souhaite que ces matériaux se colorent à la chaleur ou deviennent au contraire incolore à la chaleur.

Par ailleurs, selon le matériau sur lequel est apposé l'indicateur de chauffe, le matériau thermochrome sera choisi pour réagir à une température de chauffe donnée. A titre indicatif et non limitatif, le matériau thermochrome pourra réagir à une température de 60 à 65°C, notamment lorsque l'indicateur de chauffe est utilisé pour prévenir l'utilisateur des risques de brulures en cas de contact avec le balai et/ou le bras du système d'essuyage.

Ainsi, selon l'invention, le changement de couleur d'un matériau thermochromique apposé sur une zone du système d'essuyage soumise à la chaleur lorsque la température extérieure est basse, permet d'avertir le conducteur des conditions environnementales dangereuses afin qu'il adapte sa conduite pour une meilleure sécurité, et peut également permettre de l'avertir d'éviter de manipuler cette zone du système d'essuyage.

L'invention s'applique également à un système d'essuyage dépourvu de rampe de projection de liquide. Dans ce cas, le dispositif de chauffe est disposé essentiellement au niveau du balai est vise à assurer un bon fonctionnement du balai en conditions hivernales et à maintenir les propriétés élastiques de la lame d'essuyage.

## Revendications

1. Système d'essuyage de vitre de véhicule comportant au moins un balai d'essuie-glace entraîné en mouvement par un bras qui est articulé au dit balai par au moins un ensemble connecteur/adaptateur, lequel système est muni d'un dispositif de chauffage, **caractérisé en ce qu'**il comporte au moins un indicateur de chauffe (10, 10a, 10b, 10c ; 12, 12a, 12b, 12c ; 14, 14a ; 16; 20) placé au niveau d'une zone du système d'essuyage susceptible d'être chauffée, ledit indicateur de chauffe indiquant qu'au moins un élément dudit système d'essuyage possède une température supérieure à une valeur seuil prédéfinie de manière à éviter de manipuler cette zone du système d'essuyage.

2. Système d'essuyage selon la revendication 1, **caractérisé en ce que** le balai (3) comporte au moins une structure support (5) retenant une lame d'essuyage (4), et un profilé (6) surmontant la structure support (5) sur l'ensemble de sa longueur, ledit balai comportant en outre à ses extrémités opposées deux embouts d'assemblage (7a, 7b), et **en ce que** l'indicateur de chauffe (10, 10a, 10b, 10c; 12, 12a, 12b, 12c) est situé sur la lame d'essuyage (4), et/ou sur le profilé (6), et/ou sur un embout d'assemblage (7a,7b), et/ou sur le connecteur (17), et/ou sur l'adaptateur (8).

3. Système d'essuyage selon la revendication 1 ou 2, **caractérisé en ce que** le balai (3) comporte au moins une structure support (5) retenant une lame d'essuyage (4), et un profilé (6) surmontant la structure support (5) sur l'ensemble de sa longueur, la structure support (5) du balai comportant deux vertèbres de rigidification (18) retenues dans des rainures longitudinales de la lame d'essuyage (4) et au moins un élément de maintien (19a, 19b) possédant un bras coiffant localement le profilé (6), les deux extrémités dudit élément de maintien venant chacune en prise sur chaque vertèbre (18) du balai et **en ce que** l'indicateur de chauffe (20) est situé sur ledit élément de maintien (19a, 19b).

4. Système d'essuyage selon l'une quelconque des revendications précédentes, **caractérisé en ce qu'**il comprend un système de projection de liquide intégré au balai comprenant au moins une rampe s'étendant selon un axe longitudinal définissant la longueur du balai d'essuyage et au moins un tube d'alimentation en liquide longeant le bras (2) jusqu'au connecteur (17) et assurant l'alimentation en liquide de ladite rampe.

5. Système d'essuyage selon l'une quelconque des revendications 1 à 3, **caractérisé en ce qu'**il comprend un système de projection de liquide disposé au niveau du bras (2).

6. Système d'essuyage selon la revendication 4 ou 5, **caractérisé en ce que** le dispositif de chauffage est apte à réchauffer le liquide et est disposé au niveau de la structure support (5) du balai et/ou au niveau du tube d'alimentation assurant l'alimentation en liquide de ladite rampe.

7. Système d'essuyage selon l'une quelconque des revendications 4 à 6, caractérisé en ce l'indicateur de chauffe (14, 14a ; 16) est disposé au niveau du bras (2).

8. Système d'essuyage selon l'une quelconque des revendications précédentes, **caractérisé en ce que** l'indicateur de chauffe (10, 10a, 10b, 10c ; 12, 12a, 12b, 12c ; 14, 14a ; 16 ; 20) comprend un matériau thermochrome.

9. Système d'essuyage selon la revendication 8, **caractérisé en ce que** la forme du matériau thermochrome est un message informatif, et **en ce que** le matériau thermochrome est translucide en l'absence de tout chauffage d'un élément du système d'essuyage ou possède la même couleur que la pièce le supportant, et **en ce que** le matériau thermochrome est coloré lorsque ledit élément est chaud.

10. Système d'essuyage selon la revendications 8, **caractérisé en ce que** l'indicateur de chauffe (10, 10a, 10b, 10c ; 12, 12a, 12b, 12c ; 14, 14a ; 16 ; 20) est constitué d'une première couche formant message informatif appliqué sur un élément du système d'essuyage, ladite première couche étant recouverte d'un matériau thermochrome coloré en l'absence de tout chauffage dudit élément de manière à en masquer le message informatif, et translucide lorsque ledit élément est chaud de manière à en découvrir le message informatif.

11. Système d'essuyage selon l'une quelconque des revendications 8 à 10, **caractérisé en ce que** le matériau thermochrome de l'indicateur de chauffe (10, 10a, 10b, 10c ; 12, 12a, 12b, 12c ; 14, 14a ; 16 ; 20) comporte des cristaux, des colorants ou des pigments thermochromiques.

12. Véhicule automobile équipé d'au moins un système d'essuyage selon l'une quelconque des revendications 1 à 11.

## Patentansprüche

1. Scheibenwischsystem eines Fahrzeugs, das mindestens ein Scheibenwischerblatt umfasst, das durch einen Arm in Bewegung versetzt wird, der durch mindestens eine Verbinder/Adapter-Anordnung an das Wischerblatt angelenkt ist, wobei das System mit einer Heizvorrichtung ausgestattet ist, **dadurch gekennzeichnet, dass** es mindestens einen Heizindikator (10, 10a, 10b, 10c; 12, 12a, 12b, 12c; 14, 14a; 16; 20) aufweist, der an einem Bereich des Wischsystems platziert ist, der beheizt werden kann, wobei der Heizindikator angibt, dass mindestens ein Element des Wischsystems eine Temperatur aufweist, die höher als eine vorgegebene Schwelle ist, um zu verhindern, dass dieser Bereich des Wischsystems gehandhabt wird.

2. Wischsystem nach Anspruch 1, **dadurch gekennzeichnet, dass** das Wischerblatt (3) mindestens eine Tragstruktur (5), die eine Wischlippe (4) hält, und ein Profil (6), das die Tragstruktur (5) über ihre gesamte Länge überragt, aufweist, wobei das Wischerblatt ferner an seinen gegenüberliegenden Enden zwei Montageendstücke (7a, 7b) aufweist, und dadurch, dass sich der Heizindikator (10, 10a, 10b, 10c; 12, 12a, 12b, 12c) auf der Wischlippe (4) und/oder auf dem Profil (6) und/oder auf einem Montageendstück (7a,7b) und/oder auf dem Verbinder (17) und/oder auf dem Adapter (8) befindet.

3. Wischsystem nach Anspruch 1 oder 2, **dadurch gekennzeichnet, dass** das Wischerblatt (3) mindestens eine Tragstruktur (5), die eine Wischlippe (4) hält, und ein Profil (6), das die Tragstruktur (5) über ihre gesamte Länge überragt, aufweist, wobei die Tragstruktur (5) des Wischerblatts zwei Versteifungsrippen (18) aufweist, die in Längsrillen der Wischlippe (4) gehalten werden, und mindestens ein Halteelement (19a, 19b), das einen Arm aufweist, der das Profil (6) lokal abdeckt, wobei die zwei Enden des Halteelements jeweils auf jeder Rippe (18) des Wischerblatts in Eingriff stehen, und dadurch, dass sich der Heizindikator (20) auf dem Halteelement (19a, 19b) befindet.

4. Wischsystem nach einem der vorhergehenden Ansprüche, **dadurch gekennzeichnet, dass** es ein System zum Spritzen von Flüssigkeit umfasst, das in das Wischerblatt integriert ist, umfassend mindestens eine Rampe, die sich gemäß einer Längsachse erstreckt, welche die Länge des Wischerblatts definiert, und mindestens einen Schlauch zur Flüssigkeitsversorgung, der den Arm (2) bis zu dem Verbinder (17) entlangläuft und die Flüssigkeitsversorgung der Rampe sicherstellt.

5. Wischsystem nach einem der Ansprüche 1 bis 3, **dadurch gekennzeichnet, dass** es ein System zum Spritzen von Flüssigkeit umfasst, das am Arm (2) angeordnet ist.

6. Wischsystem nach Anspruch 4 oder 5, **dadurch gekennzeichnet, dass** die Heizvorrichtung geeignet ist, die Flüssigkeit aufzuheizen, und an der Tragstruktur (5) des Wischerblatts und/oder am Versorgungsschlauch, der die Flüssigkeitsversorgung der Rampe sicherstellt, angeordnet ist.

7. Wischsystem nach einem der Ansprüche 4 bis 6, **dadurch gekennzeichnet, dass** der Heizindikator (14, 14a; 16) am Arm (2) angeordnet ist.

8. Wischsystem nach einem der vorhergehenden Ansprüche, **dadurch gekennzeichnet, dass** der Heizindikator (10, 10a, 10b, 10c; 12, 12a, 12b, 12c; 14, 14a; 16; 20) ein thermochromes Material umfasst.

9. Wischsystem nach Anspruch 8, **dadurch gekennzeichnet, dass** die Form des thermochromen Materials eine informative Nachricht ist, und dadurch, dass das thermochrome Material bei Nichtvorhandensein jeglicher Aufheizung eines Elements des Wischsystems transluzid ist oder dieselbe Farbe wie das Teil aufweist, das es trägt, und dadurch, dass das thermochrome Material gefärbt ist, wenn das Element heiß ist.

10. Wischsystem nach Anspruch 8, **dadurch gekennzeichnet, dass** der Heizindikator (10, 10a, 10b, 10c; 12, 12a, 12b, 12c; 14, 14a; 16; 20) von einer ersten Schicht gebildet ist, die eine informative Nachricht bildet, die auf ein Element des Wischsystems aufgebracht ist, wobei die erste Schicht von einem thermochromen Material bedeckt ist, das bei Nichtvorhandensein jeglicher Aufheizung des Elements gefärbt ist, um dessen informative Nachricht zu verbergen, und transluzid ist, wenn das Element heiß ist, um dessen informative Nachricht zu offenbaren.

11. Wischsystem nach einem der Ansprüche 8 bis 10, **dadurch gekennzeichnet, dass** das thermochrome Material des Heizindikators (10, 10a, 10b, 10c; 12, 12a, 12b, 12c; 14, 14a; 16; 20) Kristalle, Farbstoffe oder thermochrome Pigmente aufweist.

12. Kraftfahrzeug, das mit mindestens einem Wischsystem nach einem der Ansprüche 1 bis 11 ausgestattet ist.

## Claims

1. Vehicle window wiper system including at least one windscreen wiper driven in movement by an arm that is articulated to said wiper by at least one connector/adapter assembly, which system is provided with a heating device, **characterized in that** it includes at least one heating indicator (10, 10a, 10b, 10c; 12, 12a, 12b, 12c; 14, 14a; 16; 20) placed in an area of the wiper system liable to be heated, said heating indicator indicating that at least one element of said wiper system is at a temperature higher than a predefined threshold value in order to avoid manipulating this area of the wiper system.

2. Wiper system according to Claim 1, **characterized in that** the wiper (3) includes at least one support structure (5) retaining a wiper blade (4) and a profile (6) on top of the support structure (5) over all of its length, said wiper further including at its opposite ends two assembly end-fittings (7a, 7b), and **in that** the heating indicator (10, 10a, 10b, 10c; 12, 12a, 12b, 12c) is located on the wiper blade (4) and/or on the profile (6) and/or on an assembly end-fitting (7a, 7b) and/or on the connector (17) and/or on the adapter (8).

3. Wiper system according to Claim 1 or 2, **characterized in that** the wiper (3) includes at least one support structure (5) retaining a wiper blade (4) and a profile (6) on top of the support structure (5) over the whole of its length, the support structure (5) of the wiper including two stiffener vertebrae (18) retained in longitudinal grooves of the wiper blade (4) and at least one holding element (19a, 19b) having an arm locally capping the profile (6), the two ends of said holding element each engaging over each vertebra (18) of the wiper, and **in that** the heating indicator (20) is located on said holding element (19a, 19b).

4. Wiper system according to any one of the preceding claims, **characterized in that** it includes a liquid sprayer system integrated into the wiper including at least one manifold extending along a longitudinal axis defining the length of the wiper and at least one liquid feed tube running along the arm (2) to the connector (17) and supplying said manifold with liquid.

5. Wiper system according to any one of Claims 1 to 3, **characterized in that** it includes a liquid sprayer system disposed on the arm (2).

6. Wiper system according to Claim 4 or 5, **characterized in that** the heating device is adapted to heat the liquid and is disposed on the support structure (5) of the wiper and/or on the feed tube supplying said manifold with liquid.

7. Wiper system according to any one of Claims 4 to 6, **characterized in that** the heating indicator (14, 14a; 16) is disposed on the arm (2).

8. Wiper system according to any one of the preceding claims, **characterized in that** the heating indicator (10, 10a, 10b, 10c; 12, 12a, 12b, 12c; 14, 14a; 16; 20) includes a thermochromic material.

9. Wiper system according to Claim 8, **characterized in that** the thermochromic material takes the form of an informational message and **in that** the thermochromic material is translucent in the absence of any heating of an element of the wiper system or is the same colour as the part supporting it, and **in that** the thermochromic material is coloured when said element is hot.

10. Wiper system according to Claim 8, **characterized in that** the heating indicator (10, 10a, 10b, 10c; 12, 12a, 12b, 12c; 14, 14a; 16; 20) consists of a first layer forming an informational message applied to an element of the wiper system, said first layer being covered by a thermochromic material that is coloured in the absence of any heating of said element so as to mask the informational message thereon and translucent when said element is hot so as to reveal the informational message.

11. Wiper system according to any one of Claims 8 to 10, **characterized in that** the thermochromic material of the heating indicator (10, 10a, 10b, 10c; 12, 12a, 12b, 12c; 14, 14a; 16; 20) includes thermochromic pigments, colouring agents or crystals.

12. Motor vehicle equipped with at least one wiper system according to any one of Claims 1 to 11.
